# EUROPÄISCHE PATENTSCHRIFT

(11) **EP 0 803 182 B1**
(45) Veröffentlichungstag und Bekanntmachung des Hinweises auf die Patenterteilung: **04.04.2001**
(21) Anmeldenummer: 97105865.6
(22) Anmeldetag: 08.04.1997
(51) Int. Cl.: A01D 45/02

(54) **Schneid- und Fördervorrichtung für stengeliges Halmgut**
Mowing and conveying device for stalk cereals
Dispositif de fauche et de transport pour céréales à tige

(30) Priorität: 22.04.1996 DE 19615882
(43) Veröffentlichungstag der Anmeldung: 29.10.1997
(73) Patentinhaber: CLAAS SAULGAU GMBH, D-88340 Saulgau (DE)
(72) Erfinder: Arnold, Rudolf, 88348 Saulgau (DE); Wicker, Anton, 88348 Saulgau-Bogenweiler (DE); Rauch, Hans, 88348 Saulgau-Kleintissen (DE); Gebele, Josef, Hosskirch (DE); Reber, Erwin, 88348 Saulgau (DE)

(56) Entgegenhaltungen:
- EP-A- 0 099 527
- EP-A- 0 673 594
- DE-A- 19 535 453
- FR-A- 2 170 206
- US-A- 3 866 399

## Beschreibung

Die Erfindung betrifft eine Schneid- und Fördervorrichtung für stengeliges Halmgut, insbesondere für Mais.

In der europäischen Patentanmeldung EP-A-0099 527 ist eine Schneid- und Fördervorrichtung insbesondere für Mais beschrieben. Dort sind umlaufende Schneidscheiben und koaxiale Förderscheiben vorhanden, die teilweise gleichsinnig, teilweise gegensinnig, aber immer mit unterschiedlichen Umfangsgeschwindigkeiten rotieren. Die abgeschnittenen Halmgutstengel werden in Ausbuchtungen zwischen benachbarten Förderzinken im Umfangsbereich der Förderscheiben aufgenommen und bis zu einer Abgabestelle gefördert. Um die Halme während des Transportes in den Ausbuchtungen festzuhalten, sind nach der EP-A-0099 527 stationäre Teilerspitzen vorhanden, die durch Führungsteile überbrückt sind, die in der Kontur zwischen den Förderscheiben in Umfangsrichtung verlaufen und die Halme in den Ausbuchtungen halten. Da dadurch die Schnittbreite in viele einzelne Arbeitsbereiche unterteilt wird, geht zum einen Schnittraum verloren und zum anderen werden Stengel, die nicht gerade in den Schneidspalt zwischen den Abteilerspitzen einlaufen, abgedrückt und schräg abgeschnitten. Die Führungsteile behindern außerdem den Schnittvorgang selbst, besonders bei feinhalmigem Erntegut.

In der nicht vorveröffentlichten deutschen Patentanmeldung DE-A-195 35 454 wird zur Vermeidung dieser Nachteile u.a. vorgeschlagen, die Ausbuchtungen mit einer bis zur Spitze der Förderzinken fortgesetzten Wölbung zu versehen, die den Halmgutstengel teilweise umschließt, so daß die Ausbuchtungen Haltefunktion ausüben können und im Arbeitsbreitenbereich keine Führungsteile mehr benötigt werden, weil die Ausbuchtungen selbst die Führung des Halmgutes übernehmen.

Aufgabe der vorliegenden Erfindung ist es, die Schneid- und Fördervorrichtung so weiterzubilden, daß ohne Führungsteile die Förderscheiben selbst die Halte- und Führungsfunktion zuverlässig übernehmen.

Zur Lösung dieser Aufgabe sind die im Anspruch 1 angegebenen Maßnahmen vorgesehen. Durch die Ausbildung der Ausbuchtungen in wenigstens einer der Förderscheiben derart, daß sich mindestens zwei Haltekammern ergeben, können die Ausbuchtungen die Stengel zuverlässig in Kammern aufnehmen und transportieren. Zusätzliche Führungsteile werden nicht benötigt. Bevorzugt werden zwei Haltekammern ausgebildet, nämlich eine vordere und eine hintere, die radial weiter innen liegt. In dieser hinteren Kammer können an weiter entfernten Stellen geschnittene Stengel aufgenommen werden, während in der vorderen Kammer dann Platz für später geschnittene Stengel entsteht und so in jeder Ausbuchtung wenigstens zwei Stengel transportiert werden können.

In vorteilhafter Ausgestaltung der Erfindung ist vorgesehen, die Haltekammern an den Ausbuchtungen der unterenFörderscheibe auszubilden. Insbesondere ist vorteilhaft, wenn dabei die Haltekammern an der nicht fördernden Flanke ausgebildet sind. Die nicht fördernde, vorlaufende Flanke der Ausbuchtung der unteren Förderscheibe ergreift an sich zunächst nicht das geschnittene Halmgut. Insbesondere beim Schneiden von Mais hat sich jedoch herausgestellt, daß die mit Maiskolben behangene Maispflanze insgesamt beim Schnittvorgang die Tendenz hat, zunächst in ihrer Position aufgrund der Trägheit zu verharren. Nachdem jedoch die Maispflanze am unteren Ende am Stengel von den Förderzinken ergriffen wird und daher der Fuß in Umfangsrichtung der Förderscheiben mitgerissen wird, der obere Teil der Pflanze jedoch nicht sofort mitgenommen wird, ergibt sich daraus ein Moment, das versucht, die Maispflanze an ihrem oberen Ende entgegen der Drehrichtung zu kippen. Dies führt dazu, daß nach dem Schnitt der Fuß der Pflanze aufgrund des Kippmomentes nach vorne ausweichen will und daher in Richtung der nichtfördernden Flanke der unteren Förderscheibe beaufschlagt wird, während er sich etwas oberhalb an der fördernden Flanke der oberen Förderscheibe quasi als Drehpunkt abstützt.

Wenn dann auch an der oberen Förderscheibe an der vorderen Flanke entsprechende Kammern ausgebildet sind, legt sich das geschnittene Halmgut in diese Kammern von selbst hinein und wird zuverlässig aufgenommen. Das Kippmoment der Pflanze entgegen der Drehrichtung sorgt für eine Fixierung, so daß ohne irgendwelche weiteren Führungsteile dann der Weitertransport erfolgen kann.

Die Ausbildung der Kammern erfolgt am geeignetsten durch die entsprechende Gestaltung der Kontur der Ausbuchtung durch Nasen, die an der unteren Förderscheibe entgegen der Drehrichtung und an der oberen Förderscheibe in Drehrichtung vorspringen. Die Nasen unterteilen die Ausbuchtung etwa in der Mitte ihrer radialen Erstreckung somit in zwei Kammern.

In weiterer Ausgestaltung der Erfindung ist vorgesehen, daß etwa in der Mitte der Arbeitsbreite dem von den Förderscheiben und der Schneidscheibe gebildeten Rotor ein Stengelheber vorgesetzt ist, der am hinteren Ende mit einem Positionsgeber versehen ist, der im Bereich der Kontur des Stengelhebers nach hinten zwischen die obere und die untere Förderscheibe eingreift. Aufgabe dieses Positionsgebers ist es, die an zuvor geschnittenen Stellen ergriffenen Stengel in die hintere Kammer einzuweisen. Hierzu ist der Positionsgeber in vorteilhafter Ausgestaltung mit einer in Drehrichtung radial nach innen mit Neigung umlaufenden Flanke versehen. Diese Flanke endet etwa auf der Höhe des Radialabstandes der Nasen der unteren Förderscheibe, so daß die Stengel, die an der Flanke entlanggleiten, dann in die Kontur der hinteren Kammer geführt werden und dort dann aufgrund des oben beschriebenen Prinzips von selbst "verrasten".

Die Erfindung wird im folgenden anhand des in der Zeichnung dargestellten Ausführungsbeispiels weiter erläutert und beschrieben. Dabei zeigt:
- Figur 1: die Draufsicht auf eine erfindungsgemäße Schneidund Fördervorrichtung,
- Figur 2: eine schematische Seitenansicht der Vorrichtung nach Figur 1, wobei weitere Antriebsteile weggelassen sind,
- Figur 3: eine Draufsicht auf einen Teil der Schneid- und Fördervorrichtung in gegenüber der Figur 1 vergrößerter Darstellung.

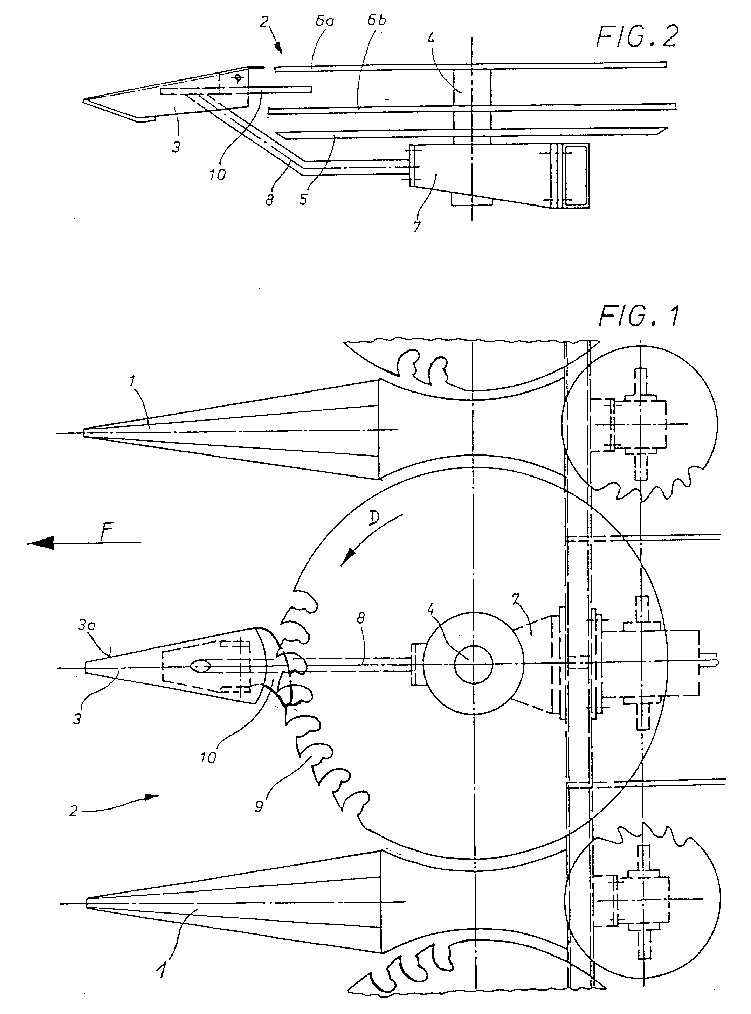

Figur 1 zeigt eine Draufsicht einer Schneid- und Fördervorrichtung mit mehreren quer zur Fahrtrichtung F nebeneinander angeordneten Fördervorrichtungen, die durch große Stengelteiler 1 voneinander getrennt sind. Jede Vorrichtung besteht aus einem Mäh- und Förderrotor 2, dem ein Stengelheber 3 mittig vorgesetzt ist. Wie insbesondere Figur 2 zeigt, ist an einer etwa senkrechten Rotorwelle 4 eine Schneidscheibe 5 und zwei Förderscheiben, nämlich eine obere Förderscheibe 6a und eine untere Förderscheibe 6b in Abständen übereinander koaxial befestigt. Der Antrieb erfolgt mittels einer horizontalen Antriebswelle über ein Winkelgetriebe, in dessen Gehäuse 7 die Rotorwelle 4 gelagert ist. An dem Winkelgetriebegehäuse ist eine nach vorn und oben ansteigende Stütze 8 befestigt, welche den Stengelheber 3 trägt. Die beiden Förderscheiben 6a, 6b drehen sich gemeinsam in Richtung des gezeigten Pfeiles D und haben am Rand Ausbuchtungen 9, die weiter unten noch näher beschrieben werden. Der Stengelheber 3 ist aus Blech geformt. Er hat vorne eine Spitze und verbreitert sich nach hinten. Mit Bezug auf die Drehrichtung der Förderscheiben 6a, 6b wird seine Seite 3a als Zuförderseite bezeichnet. Am rückwärtigen Ende dieser Seite steht innerhalb der Kontur des Stengelhebers 3 der Positionsgeber 10 in Richtung auf den Zwischenraum zwischen der oberen Förderscheibe 6a und der unteren Förderscheibe 6b (vgl. Figur 2) ab.

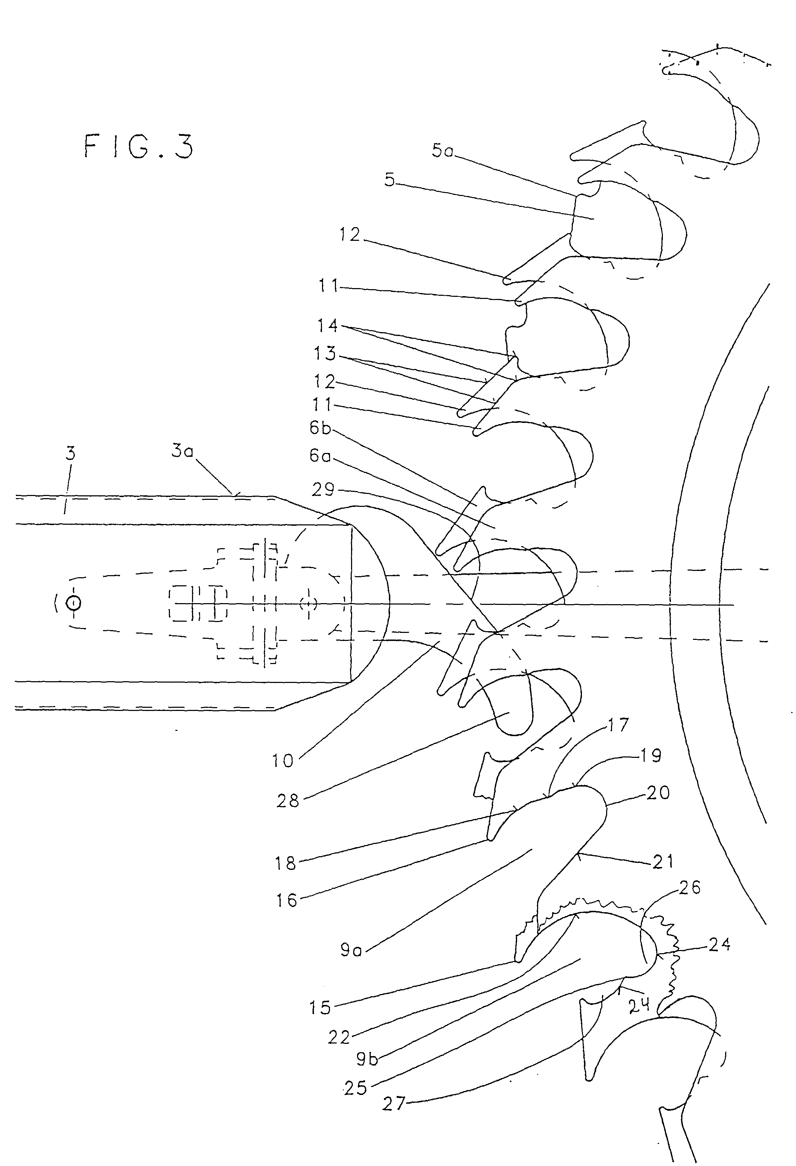

Figur 3 läßt die Ausbildung der Förderscheiben und auch des Messen im Detail erkennen. Das Messer 5 ist lediglich unterhalb zweier Ausbuchtungen im oberen Bereich der Figur 3 angedeutet und weist einen gezahnten Schneidrand 5a auf. Der Übersichtlichkeit halber ist dieser Rand nicht durchgehend unter allen Ausbuchtungen gezeichnet.

Am Umfang der Schneidscheibe 5 können an deren Oberseite in Abständen hochkant stehende, nicht näher gezeigte, jedoch in der deutschen Patentanmeldung 195 35 454 beschriebene Fangstreifen befestigt sein, die in einem flachen Winkel zur Tangente verlaufen, wobei der vorauslaufende Anfang der Fangstreifen radial weiter außen als das nachlaufende Ende liegt. Die abgeschnittenen Stengel werden dadurch radial nach innen zur Rotorachse hin beaufschlagt.

Die Figur 3 läßt des weiteren die Form der Ausbuchtungen der unteren Förderscheibe 6b und der oberen Förderscheibe 6a deutlich erkennen.

Jede Förderscheibe hat Förderzinken. Die Förderzinken der oberen Förderscheibe sind mit dem Bezugszeichen 11 versehen, diejenigen der unteren mit dem Bezugszeichen 12. Die jeweiligen Zinkenpaare der oberen und unteren Förderscheibe sind in Drehrichtung derart zueinander versetzt, daß der obere Förderzinken 11 gegenüber dem unteren Förderzinken 12 um ein geringes Maß vorläuft. Die Förderzinken 11, 12 bilden auf ihren Stirnseiten 13 jeweils eine Einlauffläche, wobei die in Drehrichtung nachlaufende Kante 14 weiter innen liegt als die jeweilige vorauslaufende Spitze des benachbarten nachfolgenden Förderzinkens der jeweils selben Förderscheibe.

Die Konturen der Ausbuchtung sind, wie man erkennt, unterschiedlich. Im unteren Teilbereich der Figur 3 ist nebeneinanderliegend einmal nur die obere Ausbuchtung 9a und danebenliegend nur die untere Ausbuchtung 9b dargestellt, um klarer den Verlauf erläutern zu können. Wie man erkennt, verläuft die Ausbuchtung 9a der oberen Förderscheibe beginnend von der Spitze 16 weg in zwei der radialen etwas nacheilenden, durch eine Nase 17 getrennten Teilbögen 18 und 19 nach innen. Diese Teilbogen 18 und 19 der Nase 17 bilden die fördernde Flanke der Ausbuchtung 9a. Von dem hinteren Teilbogen 19 verläuft die Ausbuchtung über eine halbkreisförmige Krümmung 20 in die noch steiler zur Radialen angestellte nichtfördernde Flanke 21.

Die Ausbuchtung 9b der unteren Förderscheibe dagegen geht von der Zinkenspitze 15 aus mit ihrer fördernden Flanke 22 zunächst radial nachlaufend, dann radial vorauseilend gewölbt nach hinten in die nichtfördernde Flanke 24 über. Die nichtfördernde Flanke 24 ist durch die Nase 25 in eine hintere Kammer 26 und eine vordere Kammer 27 abgeteilt.

Die so erzeugten unterschiedlichen Formen der Ausbuchtungen überdecken sich in der dargestellten Weise. Soweit die Relativlage und die Ausbildung der Krümmungsverläufe nicht durch Maßzahlen, Krümmungsradien und Winkelangaben erläutert sind, können solche Verhältnisse der Zeichnung entnommen werden, die diesbezüglich maßstäblich dargestellt ist.

Wie die Figur 3 ebenfalls erkennen läßt, verläuft der Positionsgeber 10 der Zuförderseite 3a radial mit Neigung zur Drehrichtung hin nach innen bis in die Kontur der Förderscheiben hinein und endet mit der Positionierspitze 28 etwa auf Höhe der die hintere Kammer trennenden Nasen 17 bzw. 25. Er liegt dabei im wesentlichen in der Kontur hinter dem Stengelheber 3. Die der Zuförderseite 3a zuweisende Flanke 29 des Positionsgebers 10 steht in einem Winkel von ca. 45° zur Radialen.

Mit der so ausgebildeten Schneid- und Fördereinrichtung kann nun wie folgt gearbeitet werden:

Die auf der Zuförderseite geschnittenen Stengel werden von den Förderzinken 11 und 12 erfaßt und mitgenommen. Aufgrund des bereits oben erläuterten Verharrungsbestrebens des oberen Teils von stengeligem Halmgut, insbesondere bei Mais, entsteht ein Kippmoment nach dem Schneidvorgang, das versucht, den Stengel um den Anlagepunkt an der fördernden Flanke der oberen Förderscheibe entgegen der Drehrichtung zu kippen, so daß der unterhalb der oberen Förderscheibe zu liegen kommende Fußbereich des Stengels nach vorne in eine der Kammern 26 oder 27 der unteren Ausnehmung 9b gedrückt wird und dort verharrt. Die fördernde Flanke ergreift den Stengel dabei entweder im vorderen Kammerabschnitt 18 oder im hinteren Kammerabschnitt 19 der Ausbuchtung 9a der oberen Förderscheibe. Insbesondere die durch die Nasen erfolgte Kammeraufteilung fixiert und hält die Stengel so, daß sie ohne herauszufallen und ohne zusätzliche Führungselemente abtransportiert werden. Stengel, die in der vorderen Kammer 27 aufgenommen sind, werden nun im Laufe des Weitertransportes gegen die geneigte Flanke 29 des Positionsgebers 10 gefördert und gleiten an ihr entlang radial nach innen und werden dadurch in der radial innenliegenden Kammer 26 und dem an der oberen Scheibe zugeordneten Teilbogenabschnitt 19 positioniert und insbesondere durch die Nase 25 der unteren Förderscheibe aber auch durch die Nase 17 in der oberen Förderscheibe radial nach außen abgestützt, so daß sie auch nicht aufgrund von Fliehkräften aus den Ausbuchtungen herausfallen können, vielmehr ohne weitere zusätzliche Führungsteile zuverlässig gehalten und transportiert werden.

Weitere Stengel, die in Drehrichtung hinter dem Stengelheber 3 geschnitten werden, können von dem vorderen Bereich der Ausbuchtungen durch die Kammer 27 und dem zugeordneten Teilbogenabschnitt 18 in der oberen Förderscheibe aufgenommen und ebenfalls zuverlässig gehalten und transportiert werden.

Um die Stengel auf der Abgabeseite wieder entnehmen zu können, wird bevorzugt ein rotierender Ausräumer eingesetzt, wie er z.B. in der deutschen Patentanmeldung DE-A-195 35 453. beschrieben ist.

## Patentansprüche

1. Schneid- und Fördervorrichtung für stengeliges Halmgut, insbesondere für Mais, mit mindestens einer rotierenden Schneidscheibe (5) und mindestens zwei darüber beabstandet zueinander koaxial angeordneten, am Umfang mit Förderzinken und gewölbten, aufgenommene Halmgutstengel teilweise umschließenden Ausbuchtungen (9a, 9b) versehenen Förderscheiben (6a, 6b), wobei die Ausbuchtungen (9) wenigstens einer der Förderscheiben (6a 6b) derart gestaltet sind, daß sich mindestens zwei Haltekammern (18, 19; 26, 27) ergeben.

2. Schneid- und Fördervorrichtung nach Anspruch 1, **dadurch gekennzeichnet,** daß die Haltekammern (26, 27) an den Ausbuchtungen (9b) der unteren Förderscheibe (6b) ausgebildet sind.

3. Schneid- und Fördervorrichtung nach Anspruch 2, **dadurch gekennzeichnet,** daß die Haltekammern (26, 27) an der nichtfördernden Flanke (24) der Ausbuchtungen (9b) ausgebildet sind.

4. Schneid- und Fördervorrichtung nach einem der Ansprüche 1 bis 3, **dadurch gekennzeichnet,** daß die Haltekammern (26, 27) in der unteren Förderscheibe (6b) durch Erzeugen einer entgegen der Drehrichtung vorspringenden Nase (25) etwa im mittleren Bereich der nichtfördernden Flanke (24) ausgebildet sind.

5. Schneid- und Fördervorrichtung nach wenigstens einem der vorangegangenen Ansprüche, **dadurch gekennzeichnet,** daß Haltekammern (18, 19) an der fördernden Flanke der oberen Förderscheibe (6a) ausgebildet sind.

6. Schneid- und Fördervorrichtung nach einem der vorangegangenen Ansprüche, **dadurch gekennzeichnet,** daß die Haltekammern (18, 19) in der oberen Förderscheibe durch Erzeugen einer in Drehrichtung vorspringenden Nase (17) etwa im mittleren Bereich der fördernden Flanke ausgebildet sind.

7. Schneid- und Fördervorrichtung nach einem der vorangegangenen Ansprüche, **dadurch gekennzeichnet,** daß etwa in der Mitte der Arbeitsbreite dem von den Förderscheiben und der Schneidscheibe gebildeten Rotor (2) ein Stengelheber (3) vorgesetzt ist, der am hinteren Ende mit einem Positionsgeber (10) versehen ist, der im Bereich der Kontur des Stengelhebers nach hinten zwischen die obere und die untere Förderscheibe (6a, 6b) eingreift.

8. Schneid- und Fördervorrichtung nach Anspruch 7, **dadurch gekennzeichnet,** daß der Positionsgeber (10) mit einer in Drehrichtung radial nach innen mit Neigung (29) verlaufenden Flanke versehen ist.

## Claims

1. A cutting and conveyor apparatus for stalk-type cereal, in particular for corn, comprising at least one rotating cutting disc (5) and at least two conveyor discs (6a, 6b) which are arranged at a spacing thereabove in mutually coaxial relationship and which are provided at the periphery with conveyor tines and curved recesses (9a, 9b) which partially embrace cereal stalks received therein, wherein the recesses (9) of at least one of the conveyor discs (6a, 6b) is of such a configuration that at least two holding chambers (18, 19; 26, 27) are provided.

2. A cutting and conveyor apparatus according to claim 1 characterised in that the holding chambers (26, 27) are provided at the recesses (9b) of the lower conveyor disc (6b).

3. A cutting and conveyor apparatus according to claim 2 characterised in that the holding chambers (26, 27) are provided at the non-conveying flank (24) of the recesses (9b).

4. A cutting and conveyor apparatus according to one of claims 1 to 3 characterised in that the holding chambers (26, 27) are provided in the lower conveyor disc (6b) by the production of a nose (25) which projects in opposite relationship to the direction of rotation, approximately in the central region of the non-conveying flank (24).

5. A cutting and conveyor apparatus according to at least one of the preceding claims characterised in that holding chambers (18, 19) are provided at the conveying flank of the upper conveyor disc (6a).

6. A cutting and conveyor apparatus according to one of the preceding claims characterised in that the holding chambers (18, 19) are provided in the upper conveyor disc by the production of a nose (17) which projects in the direction of rotation, approximately in the central region of the conveying flank.

7. A cutting and conveyor apparatus according to one of the preceding claims characterised in that disposed approximately in the middle of the working width in front of the rotor (2) formed by the conveyor discs and the cutting disc is a stalk lifter (3) which is provided at the rear end with a positioning device (10) which in the region of the contour of the stalk lifter engages rearwardly between the upper and the lower conveyor discs (6a, 5b).

8. A cutting and conveyor apparatus according to claim 7 characterised in that the positioning device (10) is provided with a flank which extends radially inwardly with an inclination (29) in the direction of rotation.

## Revendications

1. Dispositif de coupe et de transport pour des céréales à tiges, en particulier pour du maïs, comprenant au moins un disque de coupe (5) rotatif et au moins deux disques de transport (6a, 6b), mutuellement coaxiaux, disposés au-dessus et à distance de celui-ci, qui portent au niveau de leur pourtour des dents de transport et des évidements (9a, 9b) arqués qui entourent partiellement les tiges des céréales, les évidements (9) d'au moins un des disques de transport (6a, 6b) étant conformés de manière à former au moins deux chambres de retenue (18, 19; 26, 27).

2. Dispositif de coupe et de transport selon la revendication 1, caractérisé en ce que les chambres de retenue (26, 27) sont aménagées dans les évidements (9b) du disque de transport inférieur (6b).

3. Dispositif de coupe et de transport selon la revendication 2, caractérisé en ce que les chambres de retenue (26, 27) sont aménagées dans le flanc (24) non actif sur le plan du transport des évidements (9b).

4. Dispositif de coupe et de transport selon au moins une des revendications 1 à 3, caractérisé en ce que les chambres de retenue (26, 27) dans le disque de transport inférieur (6b) sont formées par une dent (25) qui fait saillie dans la direction opposée à la direction de rotation, sensiblement dans la région médiane du flanc (24) non actif sur le plan du transport.

5. Dispositif de coupe et de transport selon au moins une des revendications précédentes, caractérisé en ce que des chambres de retenue (18, 19) sont aménagées dans le flanc actif sur le plan du transport du disque de transport supérieur (6a).

6. Dispositif de coupe et de transport selon une des revendications précédentes, caractérisé en ce que les chambres de retenue (18, 19) dans le disque de transport supérieur sont formées par une dent (17) qui fait saillie dans la direction de rotation, sensiblement dans la région médiane du flanc actif sur le plan du transport.

7. Dispositif de coupe et de transport selon une des revendications précédentes, caractérisé en ce que, sensiblement au milieu de la largeur de travail des disques de transport, un releveur de tiges (3) est disposé devant le rotor (2) formé des disques de transport et du disque de coupe, lequel releveur de tiges à son extrémité arrière est munie d'un capteur de position (10) qui s'étend dans la région du contour du releveur de tiges, vers l'arrière, entre le disque de transport inférieur et le disque de transport supérieur (6a, 6b).

8. Dispositif de coupe et de transport selon la revendication 7 , caractérisé en ce que le capteur de position (10) est muni d'un flanc qui s'étend avec une certaine inclinaison (29) radialement vers l'intérieur dans la direction de rotation.
